# EUROPEAN PATENT APPLICATION

(11) **EP 4 749 442 A1**
(43) Date of publication of application: **27.05.2026**
(21) Application number: 24883926.8
(22) Date of filing: 07.06.2024
(51) Int. Cl.: G06F 9/451

(54) **INTERFACE DISPLAY METHOD AND ELECTRONIC DEVICE**

(30) Priority: 30.10.2023 CN 202311436668
(71) Applicant: HUAWEI TECHNOLOGIES CO., LTD., Shenzhen 518129 (CN)
(72) Inventor: WANG, Yilun, Shenzhen, Guangdong 518129 (CN); WANG, Xiang, Shenzhen, Guangdong 518129 (CN); ZHENG, Jiangzhen, Shenzhen, Guangdong 518129 (CN); JIANG, Shunji, Shenzhen, Guangdong 518129 (CN); DING, Ning, Shenzhen, Guangdong 518129 (CN); XIONG, Zhangliang, Shenzhen, Guangdong 518129 (CN)
(74) Representative: Goddar, Heinz J.
(86) International application number: PCT/CN2024/098267
(87) International publication number: WO 2025/091915

(57) **Abstract**

This application provides an interface display method and an electronic device, and relates to the field of terminal technologies. In the method, a first interface is displayed when a first trigger condition is detected, where the first interface includes a wallpaper and a first interface element, and a material of the first interface element matches a material of a subject in the wallpaper, so that the first interface element on the first interface can be more harmonized and unified with the wallpaper, to improve overall visual effect of a user interface.

## Description

This application claims priority to Chinese Patent Application No. 202311436668.6, filed with the China National Intellectual Property Administration on October 30, 2023 and entitled "INTERFACE DISPLAY METHOD AND ELECTRONIC DEVICE", which is incorporated herein by reference in its entirety.

### TECHNICAL FIELD

This application relates to the field of terminal technologies, and in particular, to an interface display method and an electronic device.

### BACKGROUND

With popularity of electronic devices such as smartphones and tablet computers, visual effect of user interfaces of the electronic devices becomes increasingly important.

**In** current electronic devices, two factors that greatly affect visual effect of a user interface are a wallpaper of the user interface and an appearance of an interface element (for example, a control). Therefore, how to improve the visual effect of the user interface through the wallpaper of the user interface and the appearance of the interface element is a technical problem that needs to be solved by a person skilled in the art.

### SUMMARY

In view of this, this application provides an interface display method and an electronic device, to improve visual effect of a user interface through a wallpaper of the user interface and an appearance of an interface element.

To achieve the foregoing objective, according to a first aspect, an embodiment of this application provides an interface display method, including:
displaying a first interface when a first trigger condition is detected, where the first interface includes a wallpaper and a first interface element, and a material of the first interface element matches a material of a subject included in the wallpaper.

According to the interface display method provided in this embodiment of this application, the material of the first interface element in the displayed first interface matches a material of the wallpaper, so that the first interface element on the first interface can be more harmonized and unified with the wallpaper, to improve overall visual effect of a user interface.

In a possible implementation of the first aspect, the first trigger condition is a screen-on operation, and the first interface is a lock screen.

In the foregoing implementation, a material of an interface element on the lock screen can match the material of the wallpaper, so that the interface element on the lock screen is more harmonized and unified with the wallpaper, to improve overall visual effect of the lock screen.

In a possible implementation of the first aspect, the first trigger condition is a screen-off operation, and the first interface is a screen-off interface.

In the foregoing implementation, a material of an interface element on the screen-off interface can match the material of the wallpaper, so that the interface element on the screen-off interface is more harmonized and unified with the wallpaper, to improve overall visual effect of the screen-off interface.

In a possible implementation of the first aspect, a first material of the first interface element is the same as a second material of a target subject in the wallpaper.

The target subject may be an only subject in the wallpaper or a primary subject in a plurality of subjects in the wallpaper. The primary subject may be a subject whose area proportion in the wallpaper is greater than a specified proportion. In this way, when the only subject or the primary subject in the wallpaper includes only one material, the material of the first interface element is the same as the material of the only subject or the primary subject in the wallpaper; or when the only subject or the primary subject in the wallpaper includes a plurality of materials, the material of the first interface element may be partially or completely the same as the materials of the only subject or the primary subject in the wallpaper, so that a selection range of the material of the first interface element can be expanded.

In a possible implementation of the first aspect, the first material is a primary material of the first interface element, and the second material is a primary material of the target subject.

In the foregoing implementation, when the subject in the wallpaper includes a plurality of materials, the primary material of the first interface element is the same as the primary material of the only subject or the primary subject in the wallpaper, and a secondary material of the first interface element may be the same as or different from a secondary material of the only subject or the primary subject in the wallpaper, so that a selection range of the secondary material of the first interface element can be expanded.

In a possible implementation of the first aspect, a third material of the first interface element is the same as a fourth material of the target subject.

When the wallpaper includes a plurality of primary subjects, the first material and the fourth material may be different materials of a same primary subject in the wallpaper, or may be different materials of different primary subjects in the wallpaper. In this way, when the subject in the wallpaper includes a plurality of materials, the primary material of the first interface element is the same as the primary material of the only subject or the primary subject in the wallpaper, and the secondary material of the first interface element is (partially or completely) the same as the secondary material of the only subject or the primary subject in the wallpaper, so that the first interface element on the first interface can be more harmonized and unified with the wallpaper, to further improve overall visual effect of a user interface.

**In** a possible implementation of the first aspect, an area proportion of each material in the first interface element matches an area proportion of a corresponding material in the target subject. In this way, the first interface element and the wallpaper can better match in terms of material, so that the first interface element is more harmonized with the wallpaper, to further improve overall visual effect of a user interface.

**In** a possible implementation of the first aspect, a color of the first interface element matches a color of the subject. In this way, the first interface element can be more harmonized with the wallpaper in color, to further improve overall visual effect of a user interface.

**In** a possible implementation of the first aspect, when the subject includes a plurality of colors, the first interface element includes one or more colors corresponding to the color of the subject. In this way, the color of the first interface element may be the same as only a primary color (the primary color may include one or more colors) of the subject, or may be the same as both the primary color and a secondary color of the subject, so that a selection range of the color of the first interface element can be expanded.

**In** a possible implementation of the first aspect, the first interface further includes a second interface element, and a color of the second interface element matches the color of the subject. In this way, the second interface element can be more harmonized with the wallpaper in color, to further improve overall visual effect of a user interface.

**In** a possible implementation of the first aspect, when the subject includes the plurality of colors, the color of the second interface element is one of primary colors of the subject. In this way, when the subject in the wallpaper includes a plurality of colors, the color of the second interface element may be any one of the various colors included in the subject, so that a selection range of the color of the second interface element can be expanded.

In a possible implementation of the first aspect, the first interface element includes one of the following: a text, an icon, and a widget.

In a possible implementation of the first aspect, the first interface element includes a text, and a font of the text matches a style of the wallpaper.

In the foregoing implementation, a style of the first interface element can match the style of the wallpaper, so that the style of the first interface element is more harmonized with the style of the wallpaper, to further improve overall visual effect of the user interface.

In a possible implementation of the first aspect, the first interface element includes a first text in a clock control, for example, a text used to display time in the clock control.

In a possible implementation of the first aspect, the first interface element is generated in the following manner:
determining a corresponding material map and a corresponding PBR parameter based on the material of the subject; and
generating, through rendering, the first interface element based on the material map and the PBR parameter.

In the foregoing implementation, the material of the first interface element generated through rendering on the first interface can match the material of the wallpaper, so that the first interface element on the first interface is more harmonized and unified with the wallpaper, to improve overall visual effect of a user interface.

In a possible implementation of the first aspect, the material map is determined based on the material of the subject and the color of the subject.

In the foregoing implementation, the color of the first interface element generated through rendering can also match the color of the wallpaper, so that the first interface element on the first interface is more harmonized and unified with the wallpaper in color, to further improve overall visual effect of a user interface.

In a possible implementation of the first aspect, before generating the first interface element through rendering, the method further includes: generating a corresponding normal map and corresponding texture map coordinates based on the material map; and
generating, through rendering, the first interface element based on the material map and the PBR parameter includes:
generating, through rendering, the first interface element based on the material map, the PBR parameter, the normal map, and the texture map coordinates.

In the foregoing implementation, the first interface element generated through rendering can feature three-dimensional visual effect, to further improve overall visual effect of a user interface.

According to a second aspect, an embodiment of this application provides an interface display apparatus, and the interface display apparatus includes:
a display module, configured to display a first interface when a first trigger condition is detected, where the first interface includes a wallpaper and a first interface element, and a material of the first interface element matches a material of a subject included in the wallpaper.

In a possible implementation of the second aspect, the first trigger condition is a screen-on operation, and the first interface is a lock screen.

In a possible implementation of the second aspect, the first trigger condition is a screen-off operation, and the first interface is a screen-off interface.

In a possible implementation of the second aspect, a first material of the first interface element is the same as a second material of a target subject in the wallpaper.

In a possible implementation of the second aspect, the first material is a primary material of the first interface element, and the second material is a primary material of the target subject.

In a possible implementation of the second aspect, a third material of the first interface element is the same as a fourth material of the target subject.

In a possible implementation of the second aspect, an area proportion of each material in the first interface element matches an area proportion of a corresponding material in the target subject.

In a possible implementation of the second aspect, a color of the first interface element matches a color of the subject.

In a possible implementation of the second aspect, when the subject includes a plurality of colors, the first interface element includes one or more colors corresponding to the color of the subject.

In a possible implementation of the second aspect, the first interface further includes a second interface element, and a color of the second interface element matches the color of the subject.

In a possible implementation of the second aspect, when the subject includes the plurality of colors, the color of the second interface element is one of primary colors of the subject.

In a possible implementation of the second aspect, the first interface element includes one of the following: a text, an icon, and a widget.

In a possible implementation of the second aspect, the first interface element includes a text, and a font of the text matches a style of the wallpaper.

In a possible implementation of the second aspect, the first interface element includes a first text in a clock control.

In a possible implementation of the second aspect, the interface display apparatus further includes a determining module and a generation module, and the determining module is configured to determine a corresponding material map and a corresponding PBR parameter based on the material of the subject; and
the generation module is configured to generate, through rendering, the first interface element based on the material map and the PBR parameter.

In a possible implementation of the second aspect, the material map is determined based on the material of the subject and the color of the subject.

In a possible implementation of the second aspect, before generating the first interface element through rendering, the generation module is further configured to generate a corresponding normal map and corresponding texture map coordinates based on the material map; and
the generation module is specifically configured to generate, through rendering, the first interface element based on the material map, the PBR parameter, the normal map, and the texture map coordinates.

According to a third aspect, an embodiment of this application provides an electronic device that includes a memory and a processor. The memory is configured to store a computer program. The processor is configured to perform the method according to the first aspect or any one of the implementations of the first aspect when invoking the computer program.

According to a fourth aspect, an embodiment of this application provides a computer-readable storage medium that stores a computer program. When the computer program is executed by a processor, the method according to the first aspect or any one of the implementations of the first aspect is implemented.

According to a fifth aspect, an embodiment of this application provides a computer program product. When the computer program product is run on an electronic device, the electronic device is enabled to perform the method according to the first aspect or any one of the implementations of the first aspect.

According to a sixth aspect, an embodiment of this application provides a chip system that includes a processor. The processor is coupled to a memory. The processor executes a computer program stored in the memory, to implement the method according to the first aspect or any one of the implementations of the first aspect. The chip system may be a single chip or a chip module that includes a plurality of chips.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic flowchart of an interface display method according to an embodiment of this application;
FIG. 2 to FIG. 5 are diagrams of a first interface according to an embodiment of this application;
FIG. 6 is a diagram of a relationship between a wallpaper style and a text font style on a first interface according to an embodiment of this application;
FIG. 7 is a schematic flowchart of a generation manner of a first interface element and a second interface element according to an embodiment of this application;
FIG. 8 is a diagram of a wallpaper and corresponding image description information according to an embodiment of this application;
FIG. 9 is a diagram of a software architecture of an electronic device according to an embodiment of this application;
FIG. 10 is a diagram of a structure of an interface display apparatus according to an embodiment of this application; and
FIG. 11 is a diagram of a structure of an electronic device according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application. The following several specific embodiments may be combined with each other, and a same or similar concept or process may not be described repeatedly in some embodiments.

An electronic device may improve visual effect of a user interface through a wallpaper of the user interface (User Interface, UI) and an appearance of an interface element (for example, a control). However, when a user resets the wallpaper, or the wallpaper is automatically changed periodically, a new wallpaper may not be in consistency with or even contradict a style of an original interface element of the user interface. As a consequence, visual effect of the user interface is affected.

In view of this, this application provides an interface display method, to improve visual effect of a user interface through a wallpaper of the user interface and an appearance of an interface element.

The interface display method provided in this application may be applied to various electronic devices that present a user interface to a user through a screen, for example, a personal computer (personal computer, PC), a smartphone, a netbook, a tablet computer, and a palmtop computer. In this embodiment of this application, an example in which the electronic device is a mobile phone is used for description.

To facilitate understanding of technical solutions in embodiments of this application, the following first explains some terms in embodiments of this application.

User interface: also referred to as graphical user interface, is a medium for interaction and information exchange between a system and a user, and is used to implement conversion between an internal form of information and a form acceptable to humans. The user interface includes software and hardware parts for implementing information exchange between the user and the system. The software part includes processing software, such as a convention and an operation command for information exchange between a user and a system. The hardware part includes an input apparatus and an output apparatus (including but not limited to a display, a touchscreen, a soft keyboard, a virtual control, a physical keyboard, a function button (such as a volume control button and a power button), a trackball, a mouse, a joystick, a camera, and an input/output apparatus that can be implemented in a future technology). The user interface enables a user to perform an operation on hardware conveniently and efficiently, to implement interaction and complete work that is expected to be completed by using the hardware. The user interface has a broad definition that a user interface exists in any field involved in information communication between human being and a machine.

Interface element: is a series of elements included in a system interface, for example, software that can meet a user interaction requirement. The interface element may include a window, a dialog box, a menu, a scroll bar, a graph, a text, an icon, a widget, and the like.

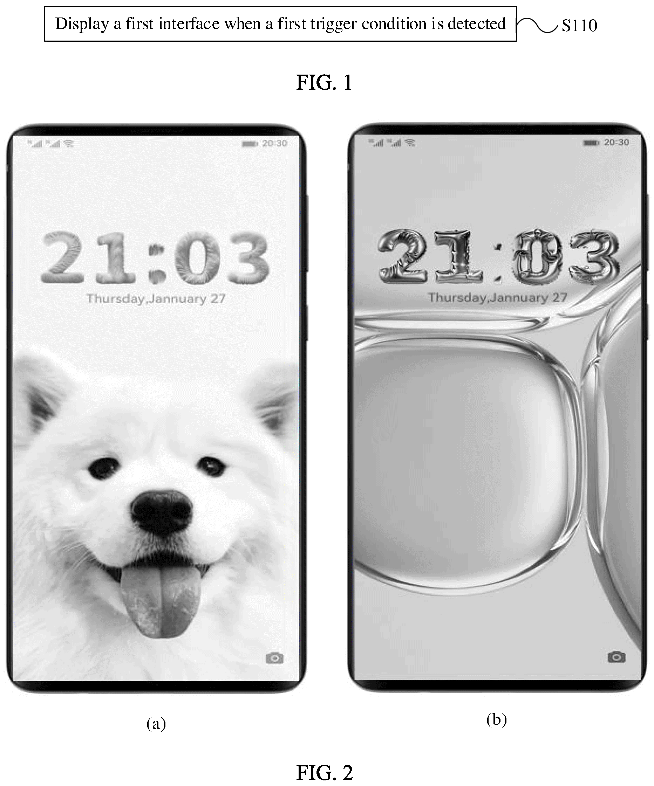

FIG. 1 is a schematic flowchart of an interface display method according to an embodiment of this application. As shown in FIG. 1, the interface display method provided in this embodiment may include the following steps.

S110: Display a first interface when a first trigger condition is detected.

The first trigger condition may be a first operation input by a user. The first operation may be a screen-on operation, and a corresponding first interface may be a lock screen, a desktop of an electronic device, or the like. The first operation may alternatively be a screen-off operation, and a corresponding first interface may be a screen-off interface. The first operation may alternatively be an unlock operation, an operation of switching a user interface on the electronic device, or the like, and a corresponding first interface may be the desktop or another user interface of the electronic device.

Alternatively, the first trigger condition may be auto lock, screen timeout, or the like.

For ease of description, in this embodiment of this application, an example in which the first trigger condition is a screen-on operation and the first interface is a lock screen is used for description.

The first operation may be a button operation, or may be a touch operation, a voice control operation, an air gesture operation, or the like. The touch operation may be a tap operation, a gesture operation, or the like. This is not particularly limited in this embodiment of this application. Other user operations in this embodiment of this application are similar to the operation. For ease of description, a button operation/tap operation is used as an example for description in this embodiment of this application.

In this embodiment of this application, a naming manner of the operation input by the user is merely an example, and should not be understood as a limitation on this embodiment of this application. In some embodiments, the same operation may alternatively be referred to as another name.

The first interface may include a wallpaper and a first interface element.

The first interface element may be located above the wallpaper, or may be located around the wallpaper.

A material of the first interface element may be similar to or the same as a material of a subject (namely, a primary object in the wallpaper, where an area proportion of the primary object in the wallpaper may be greater than or equal to a specified proportion, for example, 1/10) in the wallpaper, so that the first interface element is more harmonized and unified with the wallpaper, to improve overall visual effect of the first interface.

In some embodiments, when the wallpaper includes only one subject, and the subject includes only one material, the material of the first interface element may be similar to or the same as the material of the subject in the wallpaper.

For example, the first interface element is a text displayed on the interface, for example, time correspondingly displayed in a clock control. For example, as shown in (a) in FIG. 2, the subject in the wallpaper on the first interface is a dog, and a corresponding material of the subject is fur. A material of a text used to display time in the clock control on the first interface may also be fur, which is the same as the material of the subject in the wallpaper. For another example, as shown in (b) in FIG. 2, the subject in the wallpaper on the first interface is a metal object with a strong technological aesthetic, a corresponding material of the subject is metal, and an appearance is smooth. In this case, a material of the text used to display time in the clock control may be a metal material similar to mercury, which is similar to the material of the subject in the wallpaper.

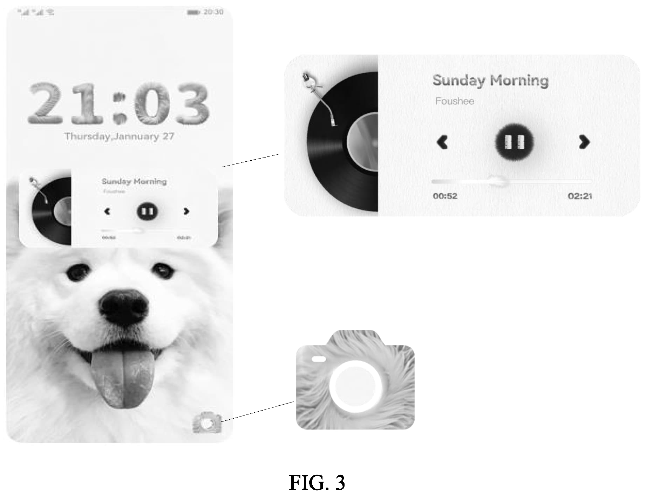

In some embodiments, the first interface element may further include a widget element, for example, a music control in a widget. For example, as shown in FIG. 3, the subject in the wallpaper on the first interface is a dog, and a corresponding material of the subject is fur. In a widget displayed on the first interface, a corresponding material of a "play/pause" key of a music control is also fur, which is the same as the material of the subject in the wallpaper.

In some embodiments, the first interface element may further include an icon. For example, as shown in FIG. 3, the subject in the wallpaper on the first interface is a dog, and a corresponding material of the subject is fur. A material of a camera icon on the first interface is also fur, which is the same as the material of the subject in the wallpaper.

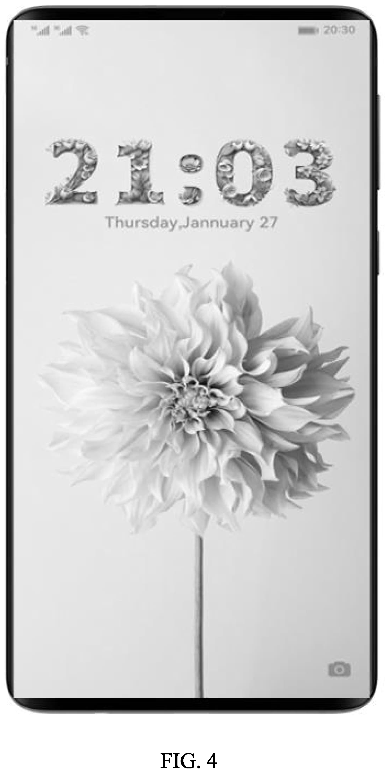

In some embodiments, when an only subject in the wallpaper includes a plurality of materials, the material of the first interface element may be a primary material of the subject in the wallpaper. As shown in FIG. 4, the subject in the wallpaper is a flower, materials of petals, stamens, and a flower stem of the subject are different (a primary material is the material of the petals and the material of the flower stem), and the material of the text used to display time in the clock control includes the material of the petals and the material of the flower stem.

In some embodiments, when the only subject in the wallpaper includes a plurality of primary materials, the material of the first interface element may alternatively include only a part of the primary materials of the only subject in the wallpaper. For example, the only subject in the wallpaper is a flower, and primary materials of the subject include a material of petals and a material of a flower stem. The material of the text used to display time in the clock control may include only the material of the petals or the material of the flower stem.

In some embodiments, when the only subject in the wallpaper includes a plurality of materials, the material of the first interface element may alternatively include both the primary material of the subject in the wallpaper and a secondary material of the subject in the wallpaper. For example, the subject in the wallpaper is a flower, and materials of petals, stamens, and a flower stem of the subject are different. The material of the text used to display time in the clock control may alternatively include both the material of the petals and the material of the stamens, and the material of the flower stem.

It may be understood that, when the only subject in the wallpaper includes a plurality of secondary materials, the first interface element may include a part of the secondary materials of the subject, or may include all secondary materials of the subject.

In some embodiments, there may be a plurality of subjects in the wallpaper. In this case, the material of the first interface element may include a material of each subject in the wallpaper. For example, if subjects in a wallpaper 1 include a tree, a dog, and a stone, the material of the first interface element may include wood (corresponding to the tree), fur (corresponding to the dog), and stone material (corresponding to the stone).

In some embodiments, when there are a plurality of subjects in the wallpaper, the material of the first interface element may alternatively include only a material of a most primary subject in the wallpaper. For example, subjects in the wallpaper 1 include a tree, a dog, and a stone, where the dog is the most primary subject, and the material of the first interface element may include only fur.

In some embodiments, when there are a plurality of subjects in the wallpaper, the material of the first interface element may alternatively include materials of a primary subject and a part of secondary subjects in the wallpaper. For example, subjects in the wallpaper 1 include a tree, a dog, and a stone, where the dog is the primary subject, and the tree and the stone are the secondary subjects. In this case, the material of the first interface element may include fur and wood, or include fur and stone material.

In some embodiments, when there are a plurality of subjects in the wallpaper and there is a subject that includes a plurality of materials, the material of the first interface element may include only a primary material of each subject in the wallpaper, or may include both the primary material of each subject in the wallpaper and a part of secondary materials of each subject in the wallpaper, or may include both the primary material of each subject in the wallpaper and all secondary materials of each subject in the wallpaper.

Further, an area proportion of each material in the first interface element may further match an area proportion of a corresponding material in each subject. In this way, the first interface element and the wallpaper can better match in terms of material, so that the first interface element is more harmonized with the wallpaper, to further improve overall visual effect of a user interface. For example, if an area ratio of the tree to the dog in the wallpaper 1 is approximately 4 to 1, an area ratio of the wood to the fur in the first interface element may also be 4 to 1.

In some embodiments, a color of the first interface element may further match a color of the subject in the wallpaper, so that the first interface element is more harmonized with the wallpaper in color, to further improve overall visual effect of a user interface.

The color of the first interface element may be the same as the color of the subject in the wallpaper. As shown in (a) in FIG. 2, if the subject in the wallpaper is a white dog, a material of a text corresponding to the clock control may be fur, and a color may be white. The color of the first interface element may alternatively belong to a same color family as the subject in the wallpaper or may be a contrast color of the color of the wallpaper.

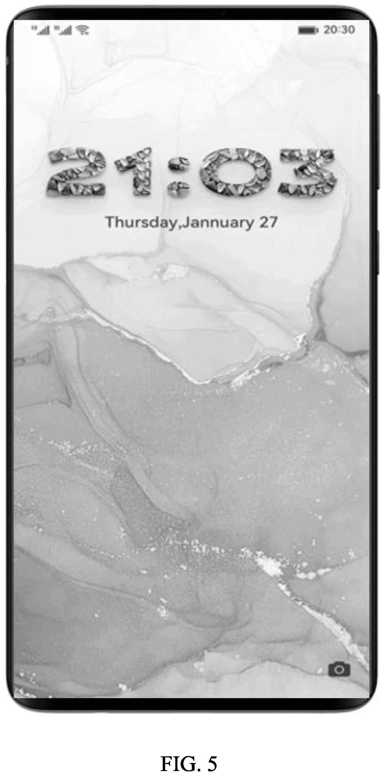

When the subject in the wallpaper includes a plurality of colors, the color of the first interface element may correspond to the color of the subject in the wallpaper, that is, includes a plurality of colors. As shown in FIG. 5, the subject in the wallpaper is jade of different colors, the material of the text used to display time in the clock control is also jade, and the color of the text used to display time in the clock control includes colors of the jade in the wallpaper.

When the wallpaper includes a plurality of subjects, the color of the first interface element may include a color of each subject in the wallpaper. For example, if subjects in the wallpaper 1 include a green tree and a white dog, the color of the first interface element may include green and white.

In some embodiments, when the wallpaper includes a plurality of subjects, the color of the first interface element may alternatively include only a primary color of each subject in the wallpaper. For example, if subjects of a wallpaper 2 include a black dog wearing a silver collar (a primary color is black and a secondary color is silver) and a flower with a green flower stem and red petals (a primary color is red and secondary color is green), the color of the first interface element may include black and red.

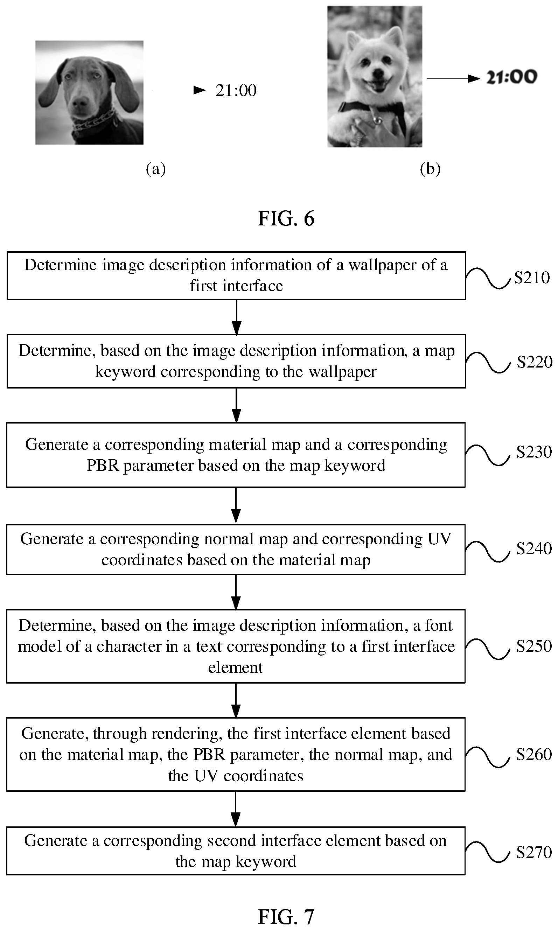

When the first interface element includes a text, in some embodiments, a font of the text on the first interface may match a style of the wallpaper, so that the first interface element is more harmonized with the wallpaper in style, to further improve overall visual effect of a user interface. As shown in (a) in FIG. 6, if the subject in the wallpaper is a handsome dog, a corresponding text used to display time in the time control may be in a standard font of a similar style, for example, Times New Roman (Times New Roman). For another example, as shown in (b) in FIG. 6, if the subject in the wallpaper is a lovely dog, a corresponding text used to display time in the time control may be in an art font of a similar style.

In some embodiments, the first interface element may further feature three-dimensional display effect, to further improve overall visual effect of a user interface. As shown in (a) and (b) in FIG. 2, the text used to display time in the time control features three-dimensional display effect.

In some embodiments, the first interface may further include a second interface element, for example, a signal icon, a battery level icon, a time icon, and a text used to display a date in the clock control on the first interface, as shown in (a) in FIG. 2. A color of the second interface element may be the same as the color of the subject in the wallpaper, so that the second interface element is more harmonized and unified with the wallpaper, to improve overall visual effect of the first interface.

When the subject in the wallpaper includes a plurality of colors, the color of the second interface element may correspond to the subject in the wallpaper, that is, include a plurality of colors. Alternatively, the color of the second interface element may be one of primary colors of the subject. For example, the subject in the wallpaper is a flower, and primary colors of the subject include red (petals) and green (flower stem). The color of the second interface element may be red, may be green, or may include both red and green.

It may be understood that the user interface shown in this embodiment of this application is merely an example, and is not intended to limit this application. In some embodiments, the user interface displayed by the electronic device may include more or fewer interface elements than those shown in the figure, to implement more or fewer functions. Positions of the interface elements may be adjusted as required. The functions may be implemented by using other interface elements, or may be implemented in another user interface. This is not particularly limited in this embodiment.

The following describes specific generation manners of the first interface element and the second interface element in this application.

FIG. 7 is a schematic flowchart of a generation manner of a first interface element and a second interface element according to an embodiment of this application. As shown in FIG. 7, the generation manner of the first interface element and the second interface element provided in this embodiment of this application may include the following steps.

S210: Determine image description information of a wallpaper on a first interface.

Different user interfaces may correspond to a same wallpaper or may correspond to different wallpapers. For example, a wallpaper corresponding to a screen-on interface may be the same as a wallpaper corresponding to a desktop of the electronic device, or may be different from the wallpaper corresponding to the desktop of the electronic device.

The image description information of the wallpaper may include descriptions of a subject and a background of the wallpaper.

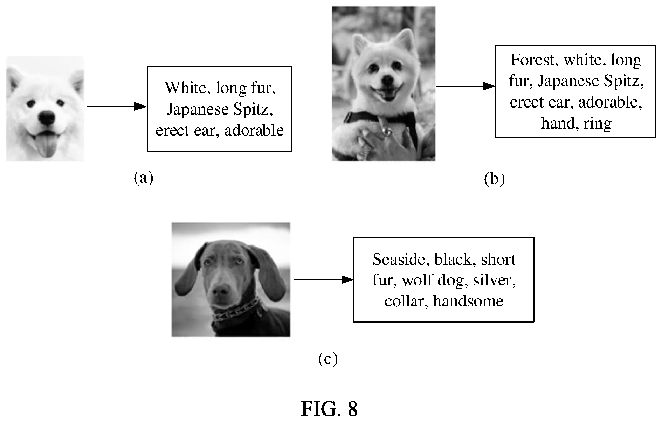

Specifically, the image description information corresponding to the wallpaper may be determined in a manner such as artificial intelligence generated content (Artificial Intelligence Generated Content, AIGC). As shown in (a) in FIG. 8, the corresponding image description information of the wallpaper may include white, long fur, Japanese Spitz, erect ear, adorable, and the like. As shown in (b) in FIG. 8, the corresponding image description information of the wallpaper may include forest, white, long fur, Japanese Spitz, erect ear, adorable, hand, ring, and the like. As shown in (c) in FIG. 8, the corresponding image description information of the wallpaper may include seaside, black, wolf dog, collar, handsome, and the like.

S220: Determine, based on the image description information, a map keyword corresponding to the wallpaper.

Specifically, the image description information of the wallpaper may be filtered to generate the corresponding map keyword. Filtered map keyword may include descriptions of a material, a color, and the like of the subject in the wallpaper. For example, the map keyword generated through filtering the image description information in (a) in FIG. 8 may be white and long fur, the map keyword generated through filtering the image description information in (b) in FIG. 8 may be white and long fur, and the map keyword generated through filtering the image description information in (c) in FIG. 8 may be black, short fur, silver, and collar.

S230: Generate a corresponding material map and a corresponding PBR parameter based on the map keyword.

Specifically, the corresponding material map may be generated through AIGC based on a material-related map keyword. For example, if the material-related map keyword is long fur, the generated material map may be a map of a fur material.

In some embodiments, a color of the corresponding material map may be further determined based on a color-related map keyword, so that a color of a finally generated first interface element matches the color of the subject in the wallpaper. For example, if the color-related map keyword is white, the color of the material map may also be white.

The material map may fully occupy space corresponding to the first interface element, to facilitate subsequent rendering.

The physically-based rendering (Physically Based Rendering, PBR) parameter may include metallic, roughness, reflectivity, and the like. A specific value of the PBR parameter is related to a material of the first interface element. For example, a plastic material corresponds to a high roughness, and a metal material corresponds to a high reflectivity and a high metallic.

The PBR parameter may be determined based on the material-related map keyword.

Specifically, a specific PBR parameter corresponding to a specific map keyword may be determined based on a set mapping relationship between the map keyword and the PBR parameter.

In some embodiments, when a PBR parameter directly corresponding to a specific map keyword A is not found, a PBR parameter corresponding to a map keyword B that is closest to the map keyword A in the foregoing mapping relationship may be further used as the PBR parameter corresponding to the map keyword A.

In some embodiments, when the PBR parameter directly corresponding to the specific map keyword A is not found, the map keyword B, a map keyword C, and the like that are close to the map keyword A may be alternatively first determined, and then an average value of PBR parameters corresponding to the map keyword B, the map keyword C, and the like in the foregoing mapping relationship is used as the PBR parameter corresponding to the map keyword A.

S240: Generate a corresponding normal map and corresponding UV coordinates based on the material map.

To make the finally generated first interface element feature stereoscopic visual effect, the corresponding normal map and the corresponding UV coordinates (UV coordinates) may be further generated according to the material map, to facilitate subsequent 3D rendering.

S250: Determine, based on the image description information, a font model of a character in a text corresponding to the first interface element.

Specifically, a word related to a style of the wallpaper in the image description information may be first determined, and then a font corresponding to the word related to the style of the wallpaper in the image description information is determined based on a set mapping relationship between various fonts and words describing various styles. Then, a corresponding font model is determined based on the font, and the determined font model is used as the font model of the character in the text corresponding to the first interface element.

For example, the image description information is forest, white, long fur, Japanese Spitz, erect ear, adorable, hand, and ring. The word related to a style of the wallpaper in the image description information is adorable. In the mapping relationship between words and fonts, a font that is mapped to the word "adorable" is an art font C, and the font model of the character in the text corresponding to the first interface element may be a font model corresponding to the art font C.

In some embodiments, if no font that is mapped to a word a exists in the mapping relationship between words and fonts, a font model corresponding to a word b that is closest to a style described by the word a in the mapping relationship between words and fonts may be used as the font model of the character in the text corresponding to the first interface element.

The font model may be a two-dimensional (2D) model or a three-dimensional (3D) model. In this embodiment, an example in which the font model is a 3D model is used for description.

It may be understood that UV coordinates corresponding to different font models of a same text are different.

S260: Generate, through rendering, the first interface element based on the material map, the PBR parameter, the normal map, and the UV coordinates.

Specifically, the material map, the PBR parameter, the normal map, the UV coordinates, a lighting parameter, and a camera parameter may be first input into a 3D rendering engine, to generate the corresponding first interface element.

The lighting parameter and the camera parameter may be fixed, or may be adjusted based on different wallpapers. For example, the lighting parameter may be adjusted based on light intensity and a light angle in the wallpaper.

In some embodiments, the font model of the character in the text corresponding to the first interface element may alternatively be used as an input parameter, and is input to the 3D rendering engine, to generate the corresponding first interface element.

S270: Generate a corresponding second interface element based on the map keyword.

Specifically, a second interface element in a corresponding color may be generated based on the color-related map keyword. For example, if the color-related map keyword is black and silver, a color of a generated second interface element may be black or silver, or may include both black and silver.

It may be understood that some first interface elements change with time. For example, a text in a clock control changes with time, or changes in response to an operation of a user. For example, a pause icon in a music control changes with a tap of the user. Therefore, when the first interface element changes, a changed first interface element may be updated based on the wallpaper of the first interface.

The clock control is used as an example. When the text in the clock control changes, UV coordinates and a corresponding font model that are corresponding to a changed text may be first determined, and then the new UV coordinates, the new font model, and a material map, a PBR parameter, a normal map, a lighting parameter, and a camera parameter that are corresponding to the clock control are input into the 3D rendering engine to generate a new text.

In some embodiments, after a new text (for example, 0 to 9) of the clock control is generated each time, an image corresponding to the text may be stored for subsequent reuse.

Specifically, each time the text of the clock control changes, it may be first determined whether an image corresponding to a changed text exists. If the image exists, an original image may be directly replaced with the image. If the image does not exist, UV coordinates and a font model that are corresponding to the changed text may be first determined, and then the new UV coordinates, the new font model, and the material map, the PBR parameter, the normal map, the lighting parameter, and the camera parameter that are corresponding to the clock control are input into the 3D rendering engine, to generate a new text, and store an image corresponding to the new text.

According to the interface display method provided in this embodiment of this application, the material of the first interface element in the displayed first interface matches the material of the wallpaper, so that the first interface element on the first interface can be more harmonized and unified with the wallpaper, to improve overall visual effect of a user interface.

A person skilled in the art can understand that the foregoing embodiments are examples and are not intended to limit this application. In a possible case, an execution sequence of one or more of the foregoing steps may be adjusted, or one or more of the steps may be selectively combined to obtain one or more other embodiments. For example, in some embodiments, step S250 may be performed after step S220, or in some other embodiments, step S250 may be performed before step S220. In some embodiments, step S270 may be performed after step S230, or in some other embodiments, step S270 may be performed before step S230. In some embodiments, step S240, step S250, and step S270 may not be performed. In some embodiments, some of step S240, step S250, and step S270 may be performed. A person skilled in the art may randomly select a combination from the foregoing steps as required, and any combination that does not depart from essence of the solutions of this application falls within the protection scope of this application.

Based on a same concept, an embodiment of this application further provides an electronic device. A software system of the electronic device may use a layered architecture, an event-driven architecture, a microkernel architecture, a micro service architecture, or a cloud architecture. In this embodiment of the present invention, an Android system of a layered architecture is used as an example to illustrate a software structure of the electronic device.

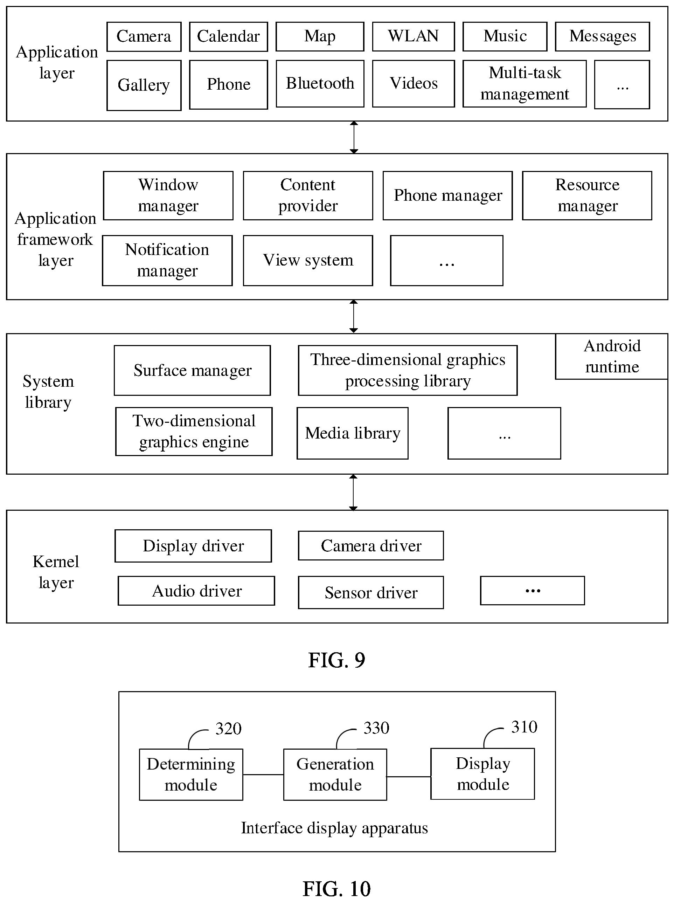

FIG. 9 is a diagram of a software architecture of an electronic device according to an embodiment of this application. As shown in FIG. 9, a software system of the electronic device may be divided into several layers. In some embodiments, an Android system may be divided into an application layer, an application framework layer, Android runtime (Android runtime), a system library, and a kernel layer from top to bottom.

The application layer may include applications such as Camera, Gallery, Calendar, Phone, Map, WLAN, Bluetooth, Music, Videos, Messages, and Multi-task management.

The application framework layer provides an application programming interface (application programming interface, API) and a programming framework for an application at the application layer. The application framework layer includes some predefined functions.

As shown in FIG. 9, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application.

The view system includes visual controls such as a control for displaying a text and a control for displaying an image. The view system may be configured to construct an application. A display interface may include one or more views.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of an Android^{®} system.

The core library includes two parts: a function that needs to be invoked in a Java language and a core library of Android^{®}.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The kernel layer is a layer between hardware and software. The kernel layer includes at least a display driver, a camera driver, an audio driver, and a sensor driver.

After the user inputs a touch operation, the touch sensor in a hardware device may generate a corresponding hardware interrupt, and send the corresponding hardware interrupt to the kernel layer. The kernel layer may encapsulate the touch operation into a touch event (for example, an action down (action down) event, an action move (action move) event, and an action up (action up) event), and may report the touch event to an upper-layer app by using an input module in the system library.

Based on a same concept, as an implementation of the foregoing method, an embodiment of this application provides an interface display apparatus. The apparatus embodiment corresponds to the foregoing method embodiments. For ease of reading, details in the foregoing method embodiments are not described in the apparatus embodiment. However, it should be clear that the apparatus in this embodiment can correspondingly implement all content of the foregoing method embodiments.

FIG. 10 is a diagram of a structure of an interface display apparatus according to an embodiment of this application. As shown in FIG. 10, the interface display apparatus provided in this embodiment may include:
a display module 310, configured to display a first interface when a first trigger condition is detected, where the first interface includes a wallpaper and a first interface element, and a material of the first interface element matches a material of a subject included in the wallpaper.

In a possible implementation of the second aspect, the first trigger condition is a screen-on operation, and the first interface is a lock screen.

In a possible implementation of the second aspect, the first trigger condition is a screen-off operation, and the first interface is a screen-off interface.

In a possible implementation of the second aspect, a first material of the first interface element is the same as a second material of a target subject in the wallpaper.

In a possible implementation of the second aspect, the first material is a primary material of the first interface element, and the second material is a primary material of the target subject.

In a possible implementation of the second aspect, a third material of the first interface element is the same as a fourth material of the target subject.

In a possible implementation of the second aspect, an area proportion of each material in the first interface element matches an area proportion of a corresponding material in the target subject.

In a possible implementation of the second aspect, a color of the first interface element matches a color of the subject.

In a possible implementation of the second aspect, when the subject includes a plurality of colors, the first interface element includes one or more colors corresponding to the color of the subject.

In a possible implementation of the second aspect, the first interface further includes a second interface element, and a color of the second interface element matches the color of the subject.

In a possible implementation of the second aspect, when the subject includes the plurality of colors, the color of the second interface element is one of primary colors of the subject.

In a possible implementation of the second aspect, the first interface element includes one of the following: a text, an icon, and a widget.

In a possible implementation of the second aspect, the first interface element includes a text, and a font of the text matches a style of the wallpaper.

In a possible implementation of the second aspect, the first interface element includes a first text in a clock control.

In a possible implementation of the second aspect, the interface display apparatus further includes a determining module 320 and a generation module 330, and the determining module 320 is configured to determine a corresponding material map and a corresponding PBR parameter based on the material of the subject; and
the generation module 330 is configured to generate, through rendering, the first interface element based on the material map and the PBR parameter.

In a possible implementation of the second aspect, the material map is determined based on the material of the subject and the color of the subject.

In a possible implementation of the second aspect, before generating the first interface element through rendering, the generation module 330 is further configured to generate a corresponding normal map and corresponding texture map coordinates based on the material map; and
the generation module 330 is specifically configured to generate, through rendering, the first interface element based on the material map, the PBR parameter, the normal map, and the texture map coordinates.

A person skilled in the art may clearly understand that, for the purpose of convenient and brief description, division into the foregoing functional units and modules is merely used as an example for description. During actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

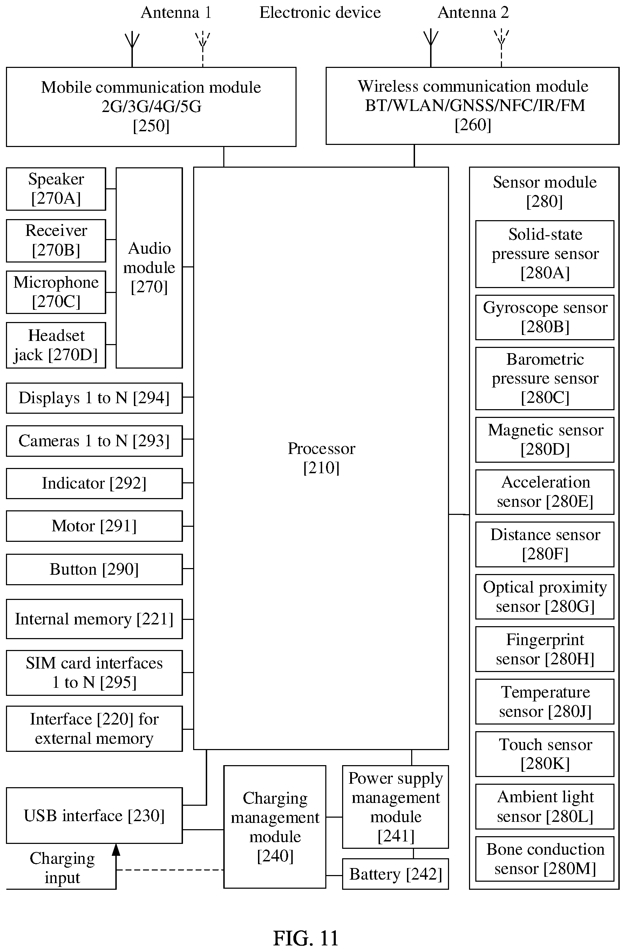

Based on a same concept, an embodiment of this application further provides an electronic device. FIG. 11 is a diagram of a structure of an electronic device according to an embodiment of this application.

The electronic device may include a processor 210, an interface 220 for external memory, an internal memory 221, a universal serial bus (universal serial bus, USB) interface 230, a charging management module 240, a power supply management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identification module, SIM) card interface 295, and the like. The sensor module 280 may include a solid-state pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and improves system efficiency.

In some embodiments, the processor 210 may include one or more interfaces. The interfaces may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDA) and a serial clock line (serial clock line, SCL). The I2S interface may be configured to perform audio communication. The PCM interface may also be used to perform audio communication, and sample, quantize, and code an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 210 to a peripheral component such as the display 294 or the camera 293. The MIPI interface includes a camera serial interface (camera serial interface, CSI), a display serial interface (display serial interface, DSI), and the like. The GPIO interface may be configured by software. The GPIO interface may be configured as a control signal or a data signal. The USB interface 230 is an interface that conforms to a USB standard specification, and may be specifically a mini USB interface, a micro USB interface, a USB type-C interface, or the like. The USB interface 230 may be configured to connect to a charger to charge the electronic device, or may be configured to transmit data between the electronic device and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the electronic device. When charging the battery 242, the charging management module 240 may further supply power to the electronic device by using the power supply management module 241.

The power supply management module 241 is configured to connect the battery 242, the charging management module 240, and the processor 210. The power supply management module 241 receives an input from the battery 242 and/or an input from the charging management module 240, and supplies power to the processor 210, the internal memory 221, the external memory, the display 294, the camera 293, the wireless communication module 260, and the like. The power supply management module 241 may be further configured to monitor parameters such as a battery capacity, a quantity of battery cycles, and a battery health status (electric leakage and impedance). In some other embodiments, the power supply management module 241 may alternatively be disposed in the processor 210. In some other embodiments, the power supply management module 241 and the charging management module 240 may alternatively be disposed in a same component.

A wireless communication function of the electronic device may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a solution that is applied to the electronic device and that includes wireless communication such as 2G/3G/4G/5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1. In some embodiments, at least some functional modules in the mobile communication module 250 may be disposed in the processor 210. In some embodiments, at least some functional modules of the mobile communication module 250 may be disposed in a same device as at least some modules of the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 270A, the receiver 270B, and the like), and displays an image or a video through the display 294. In some embodiments, the modem processor may be an independent component. In some other embodiments, the modem processor may be independent of the processor 210, and is disposed in a same device as the mobile communication module 250 or another functional module.

The wireless communication module 260 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 260 may be one or more components integrating at least one communication processing module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the electronic device, the antenna 1 and the mobile communication module 250 are coupled, and the antenna 2 and the wireless communication module 260 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change displayed information.

The display 294 is configured to display an image, a video, or the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a quantum dot light-emitting diode (quantum dot light-emitting diode, QLED), or the like. In some embodiments, the electronic device may include one or N displays 294, where N is a positive integer greater than 1.

The electronic device may implement a photographing function by using the ISP, the camera 293, the video codec, the GPU, the display 294, the application processor, or the like.

The ISP is configured to process data fed back by the camera 293. The camera 293 is configured to capture a static image or a video. The digital signal processor is configured to process a digital signal, and may process another digital signal in addition to the digital image signal. The video codec is configured to compress or decompress a digital video.

The NPU is a neural-network (neural-network, NN) computing processor. The NPU quickly processes input information by referring to a structure of a biological neural network, for example, a transfer mode between human brain neurons, and may further continuously perform self-learning. The NPU may be used to implement an application like intelligent cognition of the electronic device, for example, image recognition, facial recognition, voice recognition, and text understanding.

The internal memory 221 may be configured to store computer-executable program code. The executable program code includes instructions. The processor 210 runs the instructions stored in the internal memory 221, to perform various functional applications and data processing of the electronic device. The internal memory 221 may include a program storage area and a data storage area. The program storage area may store an operating system, an application required by at least one function (such as a sound playing function and an image playing function), and the like. The data storage area may store data (for example, audio data or an address book) and the like created when the electronic device is used. In addition, the internal memory 221 may include a high-speed random access memory, or may include a nonvolatile memory, for example, at least one magnetic disk storage device, a flash memory, or a universal flash storage (universal flash storage, UFS).

The interface 220 for external memory may be configured to connect to an external memory, for example, a micro SD card, to expand a storage capability of the electronic device. The external memory card communicates with the processor 210 through the interface 220 for external memory, to implement a data storage function. For example, files such as music and videos are stored in the external storage card.

The electronic device may implement an audio function such as music playing or recording through the audio module 270, the speaker 270A, the receiver 270B, the microphone 270C, the headset jack 270D, the application processor, and the like.

The audio module 270 is configured to convert digital audio information into an analog audio signal for output, and is also configured to convert an analog audio input into a digital audio signal. The audio module 270 may be further configured to encode and decode an audio signal. In some embodiments, the audio module 270 may be disposed in the processor 210, or some functional modules of the audio module 270 are disposed in the processor 210. The speaker 270A, also referred to as a "horn", is configured to convert an audio electrical signal into a sound signal. The receiver 270B, also referred to as an "earpiece", is configured to convert an audio electrical signal into a sound signal. The microphone 270C, also referred to as a "mike" or a "mic", is configured to convert a sound signal into an electrical signal. The headset jack 270D is configured to connect to a wired headset. The headset jack 270D may be the USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 290 includes a power button, a volume button, and the like. The button 290 may be a mechanical button, or may be a touch button. The electronic device may receive a button input, and generate a button signal input related to a user setting and function control of the electronic device. The motor 291 may generate a vibration prompt. The motor 291 may be configured to provide an incoming call vibration prompt and a touch vibration feedback. The indicator 292 may be an indicator light, and may be configured to indicate a charging status and a battery level change, or may be configured to indicate a message, a missed call, a notification, and the like. The SIM card interface 295 is configured to connect to a SIM card. The SIM card may be inserted into the SIM card interface 295 or removed from the SIM card interface 295, to implement contact with or separation from the electronic device. The electronic device may support one or N SIM card interfaces, where N is a positive integer greater than 1. The SIM card interface 295 may support a nano-SIM card, a micro-SIM card, a SIM card, and the like.

The electronic device provided in this embodiment can perform the foregoing method embodiments, and implementation principles and technical effects of the electronic device are similar to those of the foregoing method embodiments. Details are not described herein.

An embodiment of this specification further provides a computer device. The computer device includes a processor and a memory, the memory is configured to store a computer program, and the processor is configured to read the computer program to implement the method in the foregoing method embodiments.

An embodiment of this specification further provides a computer-readable storage medium that stores a computer program. When the computer program is executed by a processor, the method in the foregoing method embodiments is implemented.

An embodiment of this specification further provides a computer program product. When the computer program product is run on an electronic device, the electronic device is enabled to implement the method in the foregoing method embodiments.

An embodiment of this specification further provides a chip system that includes a processor. The processor is coupled to a memory. The processor executes a computer program stored in the memory, to implement the method in the foregoing method embodiments. The chip system may be a single chip or a chip module that includes a plurality of chips.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this specification are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired manner (for example, by using a coaxial cable, an optical fiber, or a digital subscriber line) or in a wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing relevant hardware. The program may be stored in a computer-readable storage medium. When the program runs, the procedures of the method embodiments may be included. The storage medium may include any medium that can store program code, such as a ROM, a random access memory (RAM), a magnetic disk, or a compact disc.

Names or numbers of steps in this specification do not mean that the steps in the method procedure need to be performed in a time/logical sequence indicated by the names or numbers. An execution sequence of the steps named or numbered in the procedure can be changed based on a technical objective to be achieved, provided that same or similar technical effects can be achieved.

In the foregoing embodiments, descriptions of embodiments have respective focuses. For a part that is not described in detail or recorded in an embodiment, refer to related descriptions in other embodiments.

In embodiments provided in this specification, it should be understood that the disclosed apparatus/device and method may be implemented in other manners. For example, the described apparatus/device embodiment is merely an example. For example, the division of the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that, in the descriptions of the specification and the appended claims of this application, the terms "include", "including", "have", and any variant thereof are intended to cover a non-exclusive inclusion, and all mean "include but are not limited to", unless otherwise specially emphasized. For example, processes, methods, systems, products, or devices that include a series of steps or modules are not limited to the steps or modules that are clearly listed, but may include other steps or modules that are not clearly listed or that are inherent to the processes, methods, products, or devices.

**In** the descriptions of this specification, "/" indicates an "or" relationship between associated objects, unless otherwise specified. For example, A/B may indicate A or B. In this specification, "and/or" describes only an association relationship between the associated objects, and indicates that three relationships may exist. For example, A and/or B may indicate the following three cases: Only A exists, both A and B exist, and only B exists, where A and B may be singular or plural.

**In** addition, in the descriptions of this specification, unless otherwise specified, "a plurality of" means two or more. "At least one of the following items" or a similar expression thereof means any combination of these items, including any combination of singular items or plural items. For example, at least one of a, b, or c may represent a, b, c, a and b, a and c, b and c, or a and b and c. Herein, a, b, and c may be singular or plural.

As used in this specification and the appended claims of this application, the term "if" may be interpreted as "when", "once", "in response to determining that", or "in response to detecting that" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

**In** addition, in the descriptions of the specification and the appended claims of this application, the terms "first", "second", and the like are intended to distinguish between similar objects but do not necessarily indicate a specific order or sequence, and shall not be understood as an indication or implication of relative importance or implicit indication of a quantity of indicated technical features. It should be understood that the data termed in such a way are interchangeable in proper circumstances, so that embodiments described herein can be implemented in other orders than the order illustrated or described herein; and a feature limited by "first" or "second" may explicitly or implicitly include at least one feature.

**In** embodiments of this specification, the word such as "example" or "for example" indicates an example, an illustration, or a description. Any embodiment or design scheme described as an "example" or "for example" in embodiments of this specification should not be explained as being more preferred or having more advantages than another embodiment or design scheme. Exactly, use of the word "example", "for example", or the like is intended to present a relative concept in a specific manner.

Reference to "an embodiment", "some embodiments", or the like described in the specification of this application means that specific features, structures, or characteristics described with reference to the embodiment are included in one or more embodiments of this specification. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner.

Finally, it should be noted that the foregoing embodiments are merely intended for describing the technical solutions of this specification, but not for limiting this specification. Although this specification is described in detail with reference to the foregoing embodiments, a person of ordinary skill in the art should understand that modifications may still be made to the technical solutions described in the foregoing embodiments or equivalent replacements are made to some or all technical features thereof, without departing from the scope of the technical solutions of embodiments of this specification.

## Claims

1. An interface display method, comprising:
displaying a first interface when a first trigger condition is detected, wherein the first interface comprises a wallpaper and a first interface element, and a material of the first interface element matches a material of a subject comprised in the wallpaper.

2. The method according to claim 1, wherein the first trigger condition is a screen-on operation, and the first interface is a lock screen.

3. The method according to claim 1, wherein the first trigger condition is a screen-off operation, and the first interface is a screen-off interface.

4. The method according to any one of claims 1 to 3, wherein a first material of the first interface element is the same as a second material of a target subject in the wallpaper.

5. The method according to claim 4, wherein the first material is a primary material of the first interface element, and the second material is a primary material of the target subject.

6. The method according to claim 4 or 5, wherein a third material of the first interface element is the same as a fourth material of the target subject.

7. The method according to claim 6, wherein an area proportion of each material in the first interface element matches an area proportion of a corresponding material in the target subject.

8. The method according to any one of claims 1 to 7, wherein a color of the first interface element matches a color of the subject.

9. The method according to claim 8, wherein when the subject comprises a plurality of colors, the first interface element comprises one or more colors corresponding to the color of the subject.

10. The method according to any one of claims 1 to 9, wherein the first interface further comprises a second interface element, and a color of the second interface element matches the color of the subject.

11. The method according to claim 10, wherein when the subject comprises the plurality of colors, the color of the second interface element is one of primary colors of the subject.

12. The method according to any one of claims 1 to 11, wherein the first interface element comprises one of the following: a text, an icon, and a widget.

13. The method according to claim 12, wherein the first interface element comprises a text, and a font of the text matches a style of the wallpaper.

14. The method according to any one of claims 1 to 13, wherein the first interface element comprises a first text in a clock control.

15. The method according to any one of claims 1 to 14, wherein the first interface element is generated in the following manner:
determining a corresponding material map and a corresponding physically-based rendering PBR parameter based on the material of the subject; and
generating, through rendering, the first interface element based on the material map and the PBR parameter.

16. The method according to claim 15, wherein the material map is determined based on the material of the subject and the color of the subject.

17. The method according to claim 15 or 16, wherein before generating the first interface element through rendering, the method further comprises: generating a corresponding normal map and corresponding texture map coordinates based on the material map; and
generating, through rendering, the first interface element based on the material map and the PBR parameter comprises:
generating, through rendering, the first interface element based on the material map, the PBR parameter, the normal map, and the texture map coordinates.

18. An electronic device, comprising a memory and a processor, wherein the memory is configured to store a computer program, and the processor is configured to perform the method according to any one of claims 1 to 17 when invoking the computer program.

19. A computer-readable storage medium, storing a computer program, wherein when the computer program is executed by a processor, the method according to any one of claims 1 to 17 is implemented.

20. A computer program product, wherein when the computer program product is run on an electronic device, the electronic device is enabled to perform the method according to any one of claims 1 to 17.

21. A chip system, wherein the chip system comprises a processor, the processor is coupled to a memory, and the processor executes a computer program stored in the memory, to implement the method according to any one of claims 1 to 17.
